# EUROPÄISCHE PATENTSCHRIFT

(11) **EP 1 187 286 B1**
(45) Veröffentlichungstag und Bekanntmachung des Hinweises auf die Patenterteilung: **06.06.2007**
(21) Anmeldenummer: 01118079.1
(22) Anmeldetag: 26.07.2001
(51) Int. Cl.: H02G 3/30, H02B 1/20, H02B 1/048

(54) **Kabelhalter für Stromverteiler**
Cable holder for current distributor
Porte câble pour distributeur de courant

(30) Priorität: 31.08.2000 DE 20015119 U
(43) Veröffentlichungstag der Anmeldung: 13.03.2002
(73) Patentinhaber: Hager Electro GmbH & Co. KG, 66131 Saarbrücken (DE)
(72) Erfinder: Hein, Peter, 66386 St. Ingbert (DE)
(74) Vertreter: Bernhardt, Reinold

(56) Entgegenhaltungen:
- EP-A- 0 575 263
- EP-A- 0 886 353
- DE-A- 2 843 858
- DE-U- 29 606 911
- FR-A- 2 300 290

## Beschreibung

Die Erfindung betrifft einen Kabelhalter für Stromverteiler, mit einem ösen- oder bügelartigen, einem U-förmigen Halteteil umfassenden Halteelement für die Aufnahme von Kabeln, wobei der Halteteil ein Steckverbindungselement aufweist.

Vorzugsweise werden solche Kabelhalter mit den ein Hutprofil aufweisenden Geräteträgerschienen, z.B. für Reiheneinbaugeräte, verbunden und dienen in den Verteilern zur Halterung hauptsächlich von solchen Kabeln, die sich parallel zu den Geräteträgerschienen erstrecken.

Aus der DE 88 02 894 U 1 ist ein Kabelhalter mit einem ösenartigen Halteelement bekannt, wobei an dem Halteelement außenseitig ein hinterschnittener Befestigungsstern für die Einführung in eine entsprechende Ausnehmung in einem Verbindungsstück angebracht ist. Durch Einführung des Verbindungszapfens in die Ausnehmung und Drehung gegen das Verbindungsstück kann das Halteelement an dem Verbindungsstück befestigt werden, wobei eine Verklemmung des Sterns in der Hinterschneidung der Ausnehmung erfolgt

Ein Kabelhalter der eingangs erwähnen Art geht aus der FR-A-2300290 hervor. Ein längliches Verbindungsstück dieses Kabelhalters ist mit einem Ende in ein als Halteschiene ausgebildetes Bauteil einrastbar. Das Verbindungsstück weist ferner eine senkrecht zur Längsachse des Bauteils vorstehende Rastnase auf, auf welche der U-förmige Halteteil des Halteelements mit seinem U-Steg aufsteckbar ist, wobei die Rastnase hinter einer Öffnung in dem U-Steg einrastet. Bei der Montage des Halteelements wird das Verbindungsstück durch ein Drehmoment belastet.

Der vorliegenden Erfindung liegt die Aufgabe zugrunde, einen verbesserten Kabelhalter der eingangs erwähnten Art zu schaffen, der sich gegenüber herkömmlichen solchen Kabelhaltern bei hoher Festigkeit der Steckverbindung bequemer in einem Stromverteiler montieren läßt.

Der diese Aufgabe lösende Kabelhalter nach der Erfindung ist dadurch gekennzeichnet, daß das Steckverbindungselement an einem der U-Schenkel des Halteteils angeordnet ist und von dem U-Schenkel vorsteht.

Die Montage des Halteelements ist auf einen Steckvorgang in Richtung des vorstehenden Steckverbindungselements reduziert.

Vorzugsweise ist zwischen dem Halteelement und einem Verbindungsteil eine einrastende Steckverbindung herstellbar, welche die Festigkeit der Steckverbindung erhöht und insbesondere ein ungewolltes Lösen der Steckverbindung verhindert.

Ein Verbindungsstück ist vorzugsweise mit einem zu einer Endstirnfläche öffnenden Steckloch ausgebildet.

Zur Herstellung der Steckverbindung können mehrere, wahlweise verwendbare Stecklöcher oder/und Stecknasen vorgesehen sein, so daß das Halteelement in einem Verteilerkasten in unterschiedlichen Tiefen plazierbar ist.

Verbindungsstücke und Halteelemente können in unterschiedlichen, den Rastermaßen von Verteilern entsprechenden Abmessungen zur Verfügung stehen.

In dem bevorzugten Ausführungsbeispiel der Erfindung verjüngt sich eine Stecknase im Querschnitt und ist vorzugsweise in Steckrichtung abgestuft. Eine solche abgestufte Stecknase kann auch vorteilhaft dazu verwendet werden, das Halteelement ohne Verbindungsstück z.B. an einer Trägergerüstschiene eines Verteilers anzubringen.

Vorzugsweise ist die Stecknase unter Bildung nachgiebiger Gabelschenkel am freien Ende geschlitzt. Beim Einschieben in das Steckloch geben diese Schenkel dann nach.

Ferner kann eine an ihrem freien Ende wenigstens eine Rastnase aufweisende Stecknase vorgesehen sein, vorzugsweise auf einem durch einen Schlitz gebildeten nachgiebigen Schenkel. So können die Schenkel während des Steckvorgangs nachgeben, bis die Rastnase in einer Rastausnehmung innerhalb des Stecklochs einrastet.

Zweckmäßig ist ein Steckloch mit einer durchgehenden, die Zugänglichkeit der eingerasteten Nase von außen gewährleistenden Rastausnehmung gebildet. In diesem Fall kann zum Lösen der Steck-/Rastverbindung auf die Rastnasen ein Druck ausgeübt werden, so daß die Rastung aufgehoben und die Stecknase aus dem Steckloch herausgezogen werden kann. In diesem Fall läßt sich sogar eine solche hakenförmige Rastnase verwenden, die ein Öffnen der Steck-/Rastverbin-dung allein durch Ausübung einer Zugkraft auf die Stecknase nicht zulassen würde.

In weiterer vorteilhafter Ausgestaltung der Erfindung ist ein Steckloch mit einer Aussparung am Öffnungsrand für den Eingriff eines zum Lösen der Steckverbindung verwendeten Hebelwerkzeugs gebildet.

In einer weiteren Ausführungsform der Erfindung kann das Halteelement in bezug auf eine Ebene, in welcher ein Öffnungsschlitz zum Einführen von Kabeln liegt und die den U-Steg des Halteelements senkrecht schneidet, unsymmetrisch ausgebildet sein und auf gegenüberliegenden Seiten Rastnasen aufweisen.

Die Erfindung soll nun anhand von Ausführungsbeispielen und der beiliegenden, sich auf diese Ausführungsbeispiele beziehenden Zeichnungen näher erläutert werden. Es zeigen:
- Fig. 1: einen Kabelhalter gemäß einem ersten Ausführungsbeispiel der Erfindung in einer perspektivischen Ansicht,
- Fig. 2: einen Kabelhalter gemäß einem zweiten Ausführungsbeispiel der Erfindung in einer perspektivischen Ansicht,
- Fig. 3: einen Kabelhalter gemäß einem dritten Ausführungsbeispiel der Erfindung in einer perspektivischen Ansicht,
- Fig. 4: einen Kabelhalter gemäß einem vierten Ausführungsbeispiel der Erfindung in einer perspektivischen Ansicht,
- Fig. 5: ein in den Kabelhaltern von Fig. 1 bis 4 verwendetes Verbindungsstück,
- Fig. 6: ein weiteres Ausführungsbeispiel für ein in einem Kabelhalter nach der Erfindung verwendbares Verbindungsstück, und
- Fig. 7: Bauteile eines Stromverteilers, an denen Kabelhalter gemäß der Erfindung angebracht sind.

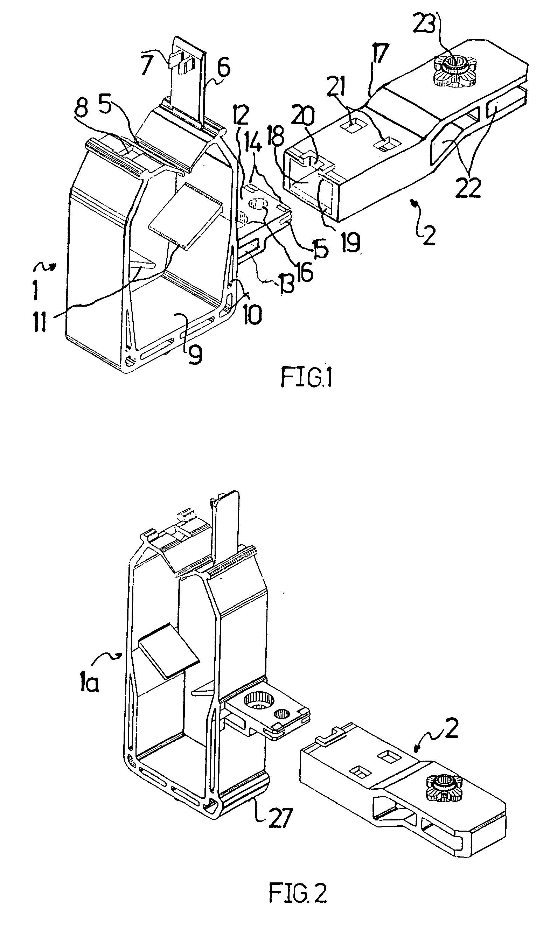

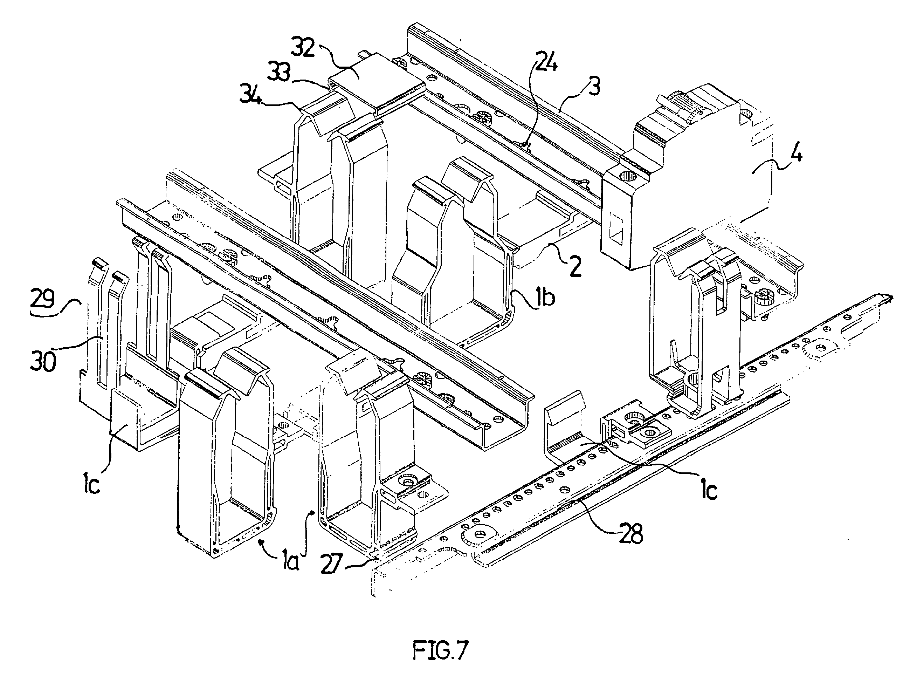

Mit dem Bezugszeichen 1 ist in Fig. 1 ein ösenartiges Halteelement eines Kabelhalters bezeichnet. Das Bezugszeichen 2 weist auf ein Verbindungsstück hin, über welches das Halteelement, wie in Fig. 7 gezeigt, z.B. an einer ein Hutprofil aufweisenden Geräteträgerschiene 3 eines Verteilers befestigt werden kann. Auf der Geräteträgerschiene 3 ist in Fig. 7 beispielhaft ein Schutzschalter 4 angebracht.

Wie aus Fig. 1 hervorgeht, ist das Halteelement mit einem Einführungsschlitz 5 für Kabel ausgebildet, wobei der Einführungsschlitz durch zueinander geneigte, eine Mulde bildende Schenkelabschnitte des Halteelements 1 begrenzt ist.

Mit dem Bezugszeichen 6 ist eine beweglich mit dem Halteelement 1 verbundene Verschlußlasche bezeichnet, die mit zwei Rastnasen 7 für den Rasteingriff in eine Durchgangsöffnung 8 in dem Halteelement 1 versehen ist.

Wie Fig. 1 ferner entnommen werden kann, weist das ösenartige Halteelement 1 einen U-förmigen Abschnitt 9 auf, welcher dem Einführungsschlitz 5 gegenüberliegt. Am U-Steg und über einen Teil der daran angrenzenden U-Schenkel ist das Halteelement 1 verstärkt, wobei Ausnehmungen 10 zur Vermeidung von Materialanhäufungen des das Halteelement bildenden Kunststoffmaterials dienen. Von einander gegenüberliegenden Innenflächen der U-Schenkel stehen muldenartig zueinander geneigte Trennstege 11 vor, welche den zum Einlegen von Kabeln in das Halteelement zur Verfügung stehenden Raum unterteilen.

An einem der U-Schenkel des Halteelements 1 ist eine plattenartige Stecknase 12 gebildet, die in dem gezeigten Ausführungsbeispiel abgestuft ist und in ihrem an das Halteelement 1 angrenzenden Abschnitt mit größerer Plattendicke Ausnehmungen 13 zur Vermeidung von Materialhäufungen aufweist. An ihrem freien Ende ist die Stecknase 12 mit Rastnasen 14 versehen. Im Bereich der Rastnasen 14 ist die Stecknase durch zur freien Endfläche und den Seitenflächen hin öffnenden Schlitze 15 geschwächt, so daß nachgiebige, federnde Gabelschenkel gebildet sind. Das Bezugszeichen 16 weist auf Durchgangsbohrungen in der Stecknase 12 mit unterschiedlichen Durchmessern hin.

Das längliche, bei 17 gekröpfte Verbindungsstück 2 weist ein zu einer Endstirnfläche hin öffnendes Steckloch 18 für die Stecknase 12 mit die Einführung der Stecknase erleichternden Abschrägungen 19 am Öffnungsrand auf. Am Öffnungsrand des Stecklochs 18 ist ferner eine Ausnehmung 20 gebildet.

Mit dem Bezugszeichen 21 sind zwei in das Steckloch 18 hinein öffnende Durchbrüche bezeichnet, die als Rastausnehmungen für die Rastnasen 14 dienen.

Mit dem Bezugszeichen 22 sind Ausnehmungen bezeichnet, die der Vermeidung von Materialhäufungen an dem Verbindungsstück 2 dienen. Das Bezugszeichen 23 weist auf einen hinterschnittenen Befestigungsstern hin, welcher in entsprechend geformte Öffnungen in der Geräteträgerschiene 3 (Fig. 7) einsteckbar ist und vier Flügel aufweist, deren dem Verbindungsstück 2 zugewandte Seiten gewölbt sind.

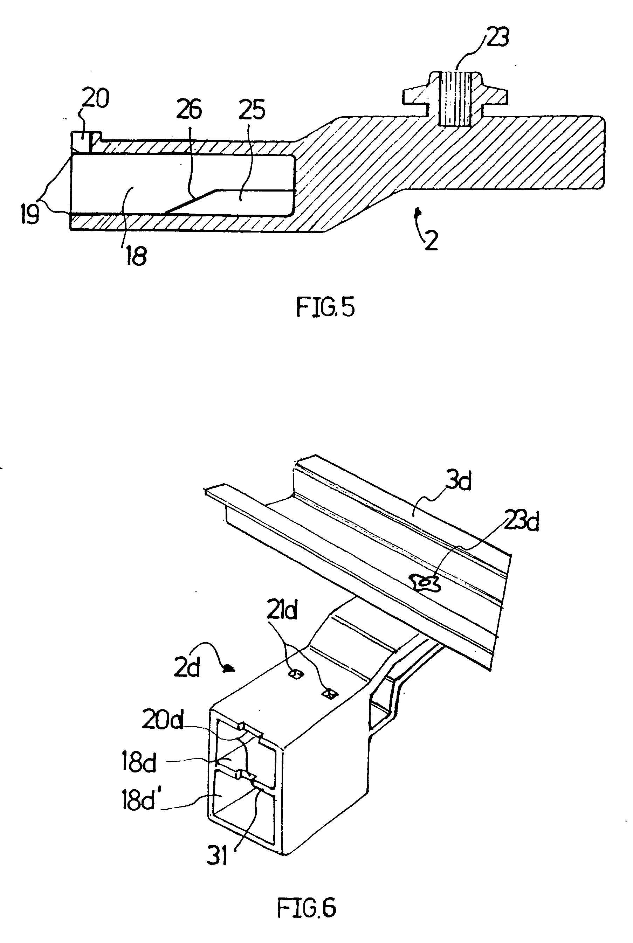

Wie in Fig. 5 zu erkennen ist, sind in dem Steckloch 18 des Verbindungsstücks 2 auf gegenüberliegenden Längsseiten Rampen 25 mit einer Abschrägung 26 gebildet, die für eine Verklemmung des dünneren Endteils der Stecknase 12 in dem Steckloch 18 sorgen und die Rastnasen 14 im Eingriff mit den Durchbrüchen 21 halten.

Zur Anbringung des in der Fig. 1 gezeigten Kabelhalters an einer Geräteträgerschiene 3 wird zunächst der Zapfen 23 des Verbindungsstücks 2 in eine dafür vorgesehen Öffnung 24 in der Hutschiene eingeführt, wobei sich das längliche Verbindungsstück 2 etwa im Winkel von 45° zur Trägerschiene 3 erstreckt. Wenn die vier Flügel des Befestigungssterns 23 durch die entsprechend gestaltete Öffnung in der Geräteträgerschiene 3 hindurchgeführt sind, wird das Verbindungsstück 2 um 45° gedreht, so daß es sich nun senkrecht zu der Geräteträgerschiene 3 erstreckt. Mit der Drehung erfolgt eine Verklemmung, wobei die Geräteträgerschiene 3 zwischen den gewölbten Seiten der vier Flügeln des Befestigungssterns 23 und der der Geräteträgerschiene 3 zugewandten Seite des Verbindungsstücks 2 eingeklemmt wird.

Zur Vervollständigung des Kabelhalters wird dann das Halteelement 1 an dem Verbindungsstück 2 befestigt, wobei die Stecknase 12 in das Steckloch 18 eingeschoben wird. Die Abschrägungen 19 erleichtern das Einschieben. Die durch die Schlitze 15 gebildeten nachgiebigen Gabelschenkel am vorderen Ende der Stecknase 12 werden beim Einschieben in das Steckloch 18 durch die Rampen 25 zunächst zusammengedrückt. Beim Einrasten der Rastnasen 14 in die Durchbrüche 21 erfolgt dann wieder eine Aufweitung. Der verstärkte, dem Halteelement 1 zugewandte Teil der Stecknase sorgt für eine hohe Stabilität der Steckverbindung in bezug auf Querkräfte, während das dünnere Ende mit den in die Durchbrüche 21 vorstehenden Rastnasen vor allem sichert, daß sich die Steckverbindung nicht durch Ausübung einer Zugkraft leicht lösen läßt.

Zum Lösen der Steckverbindung kann in die Ausnehmung 20 ein Hebelwerkzeug eingeführt werden. Darüberhinaus sind die Rastnasen 14 durch die Durchbrüche 21 hindurch zugänglich, so daß durch ein geeignetes Werkzeug eine Abbiegung der durch die Schlitze 15 gebildeten flexiblen Gabelschenkel erfolgen kann, wodurch das Lösen der Steck-/Rastverbindung durch Ausübung einer Zugkraft dann erleichtert oder überhaupt erst möglich wird.

In das Halteelement 1 können senkrecht zum Schlitz sich in Schlitzrichtung erstreckende Kabel eingeführt und das Halteelement dann mit Hilfe der Verschlußlasche 6, deren Rastnasen 7 die Durchgangsöffnung 8 hintergreifen, verschlossen werden.

Die in den Fig. 2 bis 4 dargestellten Kabelhalter verwenden das anhand des Ausführungsbeispiels von Fig. 1 beschriebene Verbindungsstück 2 und unterscheiden sich von dem Ausführungsbeispiel von Fig. 1 nur in bezug auf die Gestaltung des Halteelements, wobei auch die Stecknase 12 von diesen Unterschieden weitgehend ausgenommen ist.

Bei dem Ausführungsbeispiel von Fig. 2 ist ein Halteelement 1 a verwendet, das gegenüber dem Halteelement 1 des Ausführungsbeispiels von Fig. 1 in Einführungsrichtung der Kabel verlängert ist. An einem Ende eines U-Schenkels bzw. des U-Stegs ist ein Wulst 27 gebildet, welcher bei der Anbringung des Halteelements (ohne das Verbindungsstück) an einer Traggerüstschiene 28 eines Verteilers als Führung dient (Fig. 7), wobei die Traggerüstschiene 28 zwischen der Rastnase 12 und dem Wulst 27 gegen den U-Schenkel des Halteelements 1a zur Anlage kommt.

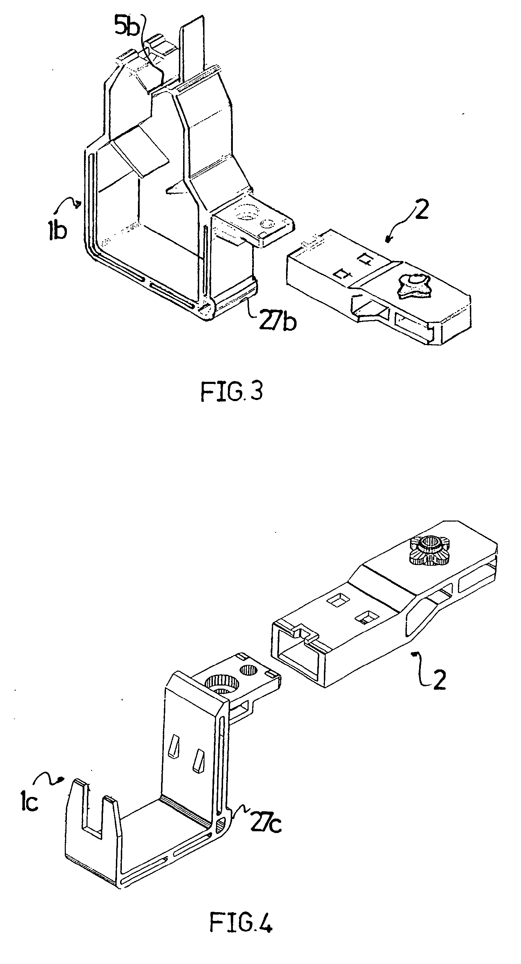

Ein Halteelement 1 b in Fig. 3 ist zu einem Einführungsschlitz 5b hin durch Kröpfung der U-Schenkel verengt. Es wäre auch denkbar, das Halteelement mit nur einem gekröpften U-Schenkel, einem geraden U-Schenkel und Stecknasen an beiden U-Schenkeln auszubilden. Bei unterschiedlichen Abmessungen des Abstandes zwischen den Geräteträgerschienen eines Verteilers kann so je nach Wahl der verwendeten Stecknase der Einführungsschlitz des Halteelements jeweils in der Mitte zwischen den Geräteträgerschienen angeordnet sein.

Bei dem Ausführungsbeispiel von Fig. 4 ist ein Halteelement 1 c lediglich bügelförmig für die Aufnahme eines Verdrahtungskanals 29 mit Schlitzen 30, durch welchen Kabel aus dem Kanal seitlich herausgeführt werden können, gebildet (Fig. 7).

Es wird nun auf Fig. 6 Bezug genommen, welche ein Verbindungsstück 2d eines Halterungselements zeigt, das über einen dem Befestigungsstern 23 entsprechenden Stern 23d an einer Geräteträgerschiene 3d, die ein Hutprofil aufweist, befestigt ist. Im Unterschied zu dem Verbindungsstück 2 ist das Verbindungsstück 2d mit zwei wahlweise verwendbaren Stecklöchern 18d und 18d' ausgebildet, so daß Halterungselemente innerhalb eines Verteilerkastens in unterschiedlichen Tiefen angeordnet werden können. Die Stecklöcher 18d und 18d' sind im Inneren wie das Steckloch 18 des Verbindungsstücks 2 ausgebildet. Entsprechend weist auch eine Zwischenwand 31 zwischen den Stecklöchern 18d und 18d' (in Fig. 6 nicht sichtbare) Durchbrüchen 21 d entsprechende Durchbrüche als Ausnehmungen für den Eingriff von Rastnasen auf.

Wie aus Fig. 7 hervorgeht, kann für die Halteelemente ein Verschlußteil 32 vorgesehen sein, das an gegenüberliegenden Seiten Rastschenkel 33 aufweist, in die am Halteelement vorgesehene Rastnasen 34 einrasten können.

## Patentansprüche

1. Kabelhalter für Stromverteiler mit einem ösen- oder bügelartigen, einen U-förmigen Halteteil (9) umfassenden Halteelemente (1) für die Aufnahme von Kabeln, wobei der Halteteil ein Steckverbindungselement aufweist,
**dadurch gekennzeichnet,**
**daß** das Steckverbindungselement an einem U-Schenkel des Halteteils (9) angeordnet ist und von dem U-Schenkel vorsteht.

2. Kabelhalter nach Anspruch 1,
**dadurch gekennzeichnet,**
**daß** zwischen dem Halteelement (1) und einem Verbindungsstück (2) eine einrastende Steckverbindung herstellbar ist.

3. Kabelhalter nach Anspruch 2,
**dadurch gekennzeichnet,**
**daß** das Verbindungsstück (2) ein zu einer Endstirnfläche öffnendes Steckloch (18) aufweist.

4. Kabelhalter nach Anspruch 2 oder 3,
**dadurch gekennzeichnet,**
**daß** zur Herstellung der Steckverbindung mehrere, wahlweise verwendbare Stecklöcher (18d,18d') oder/und Stecknasen vorgesehen sind.

5. Kabelhalter nach einem der Ansprüche 1 bis 4,
**dadurch gekennzeichnet,**
**daß** eine sich im Querschnitt verjüngende, vorzugsweise in Steckrichtung abgestufte, Stecknase (12) vorgesehen sind.

6. Kabelhalter nach einem der Ansprüche 1 bis 5,
**dadurch gekennzeichnet,**
**daß** eine unter Bildung nachgiebiger Gabelschenkel am freien Ende wenigstens einen Schlitz (15) aufweisende Stecknase (12) vorgesehen ist.

7. Kabelhalter noch einem der Ansprüche 1 bis 6,
**dadurch gekennzeichnet,**
**daß** eine an ihrem freien Ende wenigstens eine Rastnase (14) aufweisende Steckhase (12) vorgesehen ist.

8. Kabelhalter nach Anspruch 7,
**dadurch gekennzeichnet,**
**daß** ein Steckloch (18) mit einer durchgehenden, die Zugänglichkeit der eingerasteten Rastnase (14) von außen gewährleistenden Rastausnehmung (21) gebildet ist.

9. Kabelhalter nach einem der Ansprüche 1 bis 8,
**dadurch gekennzeichnet,**
**daß** ein Steckloch (18) mit einer Aussparung (20) am Öffnungsrand für den Eingriff eines zum Lösen der Steckverbindung verwendenden Werkzeugs gebildet ist.

10. Kabelhalter nach einem der Ansprüche 1 bis 9;
**dadurch gekennzeichnet,**
**daß** das Halteelement in bezug auf eine Ebene, in welcher ein Öffnungsschlitz zum Einführen von Kabeln gelegen ist und die einen U-Steg des Halteelements senkrecht schneidet, unsymmetrisch ausgebildet ist.

## Claims

1. Cable holder for current distributors having an eyelet-like or clip-like holding element (1), which comprises a U-shaped holding part (9), for accommodating cables, wherein the holding part has a plug-in connection element, **characterized in that** the plug-in connection element is arranged on a U limb of the holding part (9) and protrudes from the U limb.

2. Cable holder according to Claim 1, **characterized in that** a latching-in plug-in connection can be produced between the holding element (1) and a connection piece (2).

3. Cable holder according to Claim 2, **characterized in that** the connection piece (2) has a plug-in hole (18), which is open towards an end face.

4. Cable holder according to Claim 2 or 3, **characterized in that**, in order to produce the plug-in connection, a plurality of plug-in holes (18d, 18d') and/or plug-in tabs which can optionally be used are provided.

5. Cable holder according to one of Claims 1 to 4, **characterized in that** a plug-in tab (12), which tapers in cross section and is preferably graduated in the plug-in direction, is provided.

6. Cable holder according to one of Claims 1 to 5, **characterized in that** a plug-in tab (12), which has at least one slit (15) at the free end so as to form flexible fork limbs, is provided.

7. Cable holder according to one of Claims 1 to 6, **characterized in that** a plug-in tab (12), which has at least one latching tab (14) at its free end, is provided.

8. Cable holder according to Claim 7, **characterized in that** a plug-in hole (18) is formed with a latching cutout (21), which passes all the way through and ensures that the latched-in latching tab (14) is accessible from the outside.

9. Cable holder according to one of Claims 1 to 8, **characterized in that** a plug-in hole (18) is formed with a recess (20) at the opening edge for the engagement of a tool used for detaching the plug-in connection.

10. Cable holder according to one of Claims 1 to 9, **characterized in that** the holding element is asymmetrical with respect to a plane in which an opening slot for inserting cables is situated and which intersects, at right angles, a U web of the holding element.

## Revendications

1. Porte-câble pour distributeur de courant, comportant un élément porteur (1) en forme d'oeillet ou d'étrier et comprenant une partie porteuse en forme de U (9) pour recevoir des câbles, la partie porteuse comprenant un élément de liaison à enfichage,
**caractérisé en ce que**
l'élément de liaison à enfichage est agencé sur une branche du U de la partie porteuse (9) et fait saillie de la branche du U.

2. Porte-câble selon la revendication 1,
**caractérisé en ce que**
une liaison à enfichage avec enclenchement est susceptible d'être établie entre l'élément porteur (1) et un tronçon de liaison (2).

3. Porte-câble selon la revendication 2,
**caractérisé en ce que**
le tronçon de liaison (2) présente un trou d'enfichage (18) qui s'ouvre vers une surface frontale d'extrémité.

4. Porte-câble selon la revendication 2 ou 3,
**caractérisé en ce que**
pour établir la liaison à enfichage, il est prévu plusieurs trous d'enfichage (18d, 18d') et/ou plusieurs becs enfichables, utilisables au choix.

5. Porte-câble selon l'une des revendications 1 à 4,
**caractérisé en ce que**
il est prévu un bec enfichable (12) de section transversale en rétrécissement et de préférence en gradin en direction d'enfichage.

6. Porte-câble selon l'une des revendications 1 à 5,
**caractérisé en ce que**
il est prévu un bec enfichable (12) présentant à l'extrémité libre au moins une fente (15) en formant des bras de fourche souples.

7. Porte-câble selon l'une des revendications 1 à 6,
**caractérisé en ce que**
il est prévu un bec enfichable (12) présentant à son extrémité libre au moins un bec d'enclenchement (14).

8. Porte-câble selon la revendication 7,
**caractérisé en ce que**
il est prévu un trou d'enfichage (18) avec un évidement d'enclenchement (21) continu assurant de l'extérieur l'accessibilité au bec d'enclenchement (14) enclenché.

9. Porte-câble selon l'une des revendications 1 à 8,
**caractérisé en ce que**
il est prévu un trou d'enfichage (18) avec une échancrure (20) au bord de l'ouverture pour l'engagement d'un outil utilisé pour défaire la liaison à enfichage.

10. Porte-câble selon l'une des revendications 1 à 9,
**caractérisé en ce que**
l'élément porteur est réalisé de façon asymétrique par rapport à un plan dans lequel est disposée une fente d'ouverture pour introduire des câbles et qui recoupe perpendiculairement une branche du U de l'élément porteur.
